# FASCICULE DE BREVET EUROPEEN

(11) **EP 3 768 493 B1**
(45) Date de publication et mention de la délivrance du brevet: **26.04.2023**
(21) Numéro de dépôt: 19711603.1
(22) Date de dépôt: 19.03.2019
(51) Int. Cl.: B29C 53/62

(54) **DISPOSITIF DE COMPACTAGE D'UNE STRUCTURE TUBULAIRE, INSTALLATION ET PROCÉDÉ ASSOCIÉS**
VORRICHTUNG ZUM VERDICHTEN EINER ROHRFÖRMIGEN STRUKTUR, ZUGEHÖRIGE ANLAGE UND VERFAHREN
DEVICE FOR COMPACTING A TUBULAR STRUCTURE, ASSOCIATED INSTALLATION AND METHOD

(30) Priorité: 20.03.2018 FR 1852376
(43) Date de publication de la demande: 27.01.2021
(73) Titulaire: TechnipFMC Subsea France, 92400 Courbevoie (FR)
(72) Inventeur: BERTOLOTTI, Philippe, 92150 Suresnes (FR); DO, Anh Tuan, 95240 Cormeilles en Parisis (FR); NIQUET, Michel, 65360 Bernac-Dessus (FR); SOULIER, Jean-Pierre, 65320 Gayan (FR)
(74) Mandataire: Lavoix
(86) Numéro de dépôt international: PCT/EP2019/056893
(87) Numéro de publication internationale: WO 2019/180050

(56) Documents cités:
- GB-A- 2 212 590
- US-A- 4 479 835

## Description

La présente invention concerne un dispositif de compactage d'une structure tubulaire selon le préambule de la revendication 1.

La structure tubulaire est par exemple une couche en matériau composite d'une conduite flexible de transport de fluide à travers une étendue d'eau.

Les conduites flexibles du type précité sont utilisées notamment en eau profonde dans l'industrie pétrolière et gazière. Elles s'étendent généralement à travers une étendue d'eau entre un ensemble de surface et un ensemble de fond. Ces conduites peuvent également s'étendre entre deux ensembles de surface.

L'ensemble de fond est destiné à recueillir le fluide exploité dans le fond de l'étendue d'eau. L'ensemble de surface est généralement flottant. Il est destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m, voire supérieure à 1000 m ou à 2000 m pour des applications en eaux ultra-profondes.

Pour les grandes profondeurs, la conduite flexible est dimensionnée pour résister à une pression hydrostatique très importante, par exemple 200 bar pour une conduite immergée à 2000 m de profondeur.

De plus, la conduite flexible est généralement dimensionnée pour résister à une tension axiale supérieure au poids total de la conduite flexible suspendue à un ensemble de surface et s'étendant sous l'eau depuis la surface jusqu'au fond marin. Ceci est notamment le cas lorsque la conduite flexible est utilisée comme une conduite montante (« riser » en langue anglaise) destinée à assurer en service une liaison verticale entre le fond marin et l'ensemble de surface. La capacité de la conduite flexible à supporter son propre poids lorsqu'elle est suspendue dans l'eau permet notamment de faciliter son installation en mer à partir d'un navire de pose.

Par suite, pour les grandes profondeurs, il est avantageux d'utiliser des conduites flexibles à qui sont la fois légères et très résistantes à la pression.

La plupart des conduites flexibles utilisées dans l'industrie pétrolière offshore sont des conduites flexibles de type non lié (« unbonded » en langue anglaise) comportant au moins une gaine d'étanchéité renforcée par au moins une couche de renfort constituée de fils métalliques enroulés en hélice autour de la gaine d'étanchéité. De telles conduites sont notamment décrites dans le document normatif API 17J, « Specification for Unbonded Flexible Pipe », 4ème édition, mai 2014 publié par l'American Petroleum Institute. Cependant, ces conduites flexibles ont généralement un poids élevé, ce qui rend leur installation en mer complexe et coûteuse. De plus, les conduites montantes de ce type doivent généralement être équipées de bouées pour les applications à grande profondeur, ce qui induit des dépenses supplémentaires. Enfin, les couches métalliques de renfort sont généralement sensibles à la corrosion, notamment à la corrosion sous l'influence de gaz acides du type H2S et CO2 présents dans les hydrocarbures de certains gisements. Pour pallier ces problèmes, on connaît des conduites flexibles allégées comportant une structure tubulaire de renfort en matériau composite comprenant une matrice et des fibres de renfort noyées dans la matrice.

On connaît notamment des conduites dans lesquelles la structure tubulaire de renfort est constituée d'un matériau composite à matrice thermoplastique, par exemple d'un matériau composite comportant une matrice en PEEK (polyétheréthercétone) renforcée par des fibres de carbone. De telles conduites sont connues sous le nom « Thermoplastic Composite Pipe » (TCP) et sont notamment décrites dans le document normatif DNVGL-RP-F119, « Recommended Practice - Thermoplastic composites pipes », publié en décembre 2015 par le DNV GL (Det Norske Veritas GL).

Les conduites flexibles TCP comportent généralement de l'intérieur vers l'extérieur une gaine interne tubulaire d'étanchéité en matériau polymère (« polymer liner » en langue anglaise), une structure tubulaire de renfort en matériau composite et une gaine externe d'étanchéité en matériau polymère. La structure tubulaire de renfort étant théoriquement étanche, la gaine interne tubulaire est optionnelle. Cependant, en pratique, la plupart de ces conduites flexibles comportent une gaine interne tubulaire afin de garantir l'étanchéité de la conduite dans le cas où la structure tubulaire de renfort présenterait un défaut de fabrication affectant son étanchéité.

La structure tubulaire de renfort est avantageusement collée ou soudée à la gaine interne tubulaire afin d'éviter l'écrasement (« collapse » en anglais) de la gaine interne tubulaire lors d'une décompression rapide de la conduite transportant des hydrocarbures en phase gazeuse. La gaine externe est optionnelle. De telles conduites TCP sont notamment commercialisées par les sociétés Magma Global Ltd (TCP de marque déposée m-pipe^{®}) et Airborne Oil & Gas B.V. Elles sont notamment décrites dans GB2526986A, WO2014/023943, WO2012/118378, WO2006/107196 et EP1090243B1.

On connait également des conduites flexibles similaires aux conduites flexibles TCP dans lesquelles la structure tubulaire de renfort est constituée d'un matériau composite à matrice thermodurcissable, par exemple un composite comportant une matrice en résine époxy renforcée par des fibres de verre. Ces conduites présentent généralement une flexibilité inférieure à celle des conduites TCP.

On connait aussi des conduites flexibles dites « hybrides » qui présentent une structure intermédiaire entre celle des conduites flexibles TCP et celle des conduites flexibles de type non lié. Ces conduites comportent de l'intérieur vers l'extérieur une gaine interne tubulaire d'étanchéité, une structure tubulaire de renfort en matériau composite, au moins une nappe d'armures de traction et une gaine externe. La structure tubulaire de renfort est avantageusement constituée d'un matériau composite à matrice thermoplastique, mais il est aussi possible d'utiliser une matrice thermodurcissable. La structure tubulaire de renfort est avantageusement soudée ou collée à la gaine interne tubulaire. La ou les nappes d'armures de traction sont similaires à celle des conduites flexibles de type non lié, c'est-à-dire qu'elles sont constituées de fils enroulés hélicoïdalement. En outre, optionnellement, ces conduites peuvent comporter une carcasse interne située à l'intérieur de la gaine interne d'étanchéité, ladite carcasse interne ayant pour fonction d'augmenter la résistance à l'écrasement (« collapse » en anglais) de la conduite. La carcasse interne est formée par exemple d'un feuillard métallique profilé, enroulé en spirale. Les spires du feuillard sont avantageusement agrafées les unes aux autres, ce qui permet de reprendre les efforts d'écrasement.

Ces conduites flexibles hybrides sont notamment décrites dans WO00/70256 et dans l'article « Unbonded Flexible Pipe : Composite Reinforcement for Optimized Hybrid Design » écrit par N. Dodds, V. Jha, J. Latto et D. Finch, et publié sous la référence OTC-25753 lors de la conférence « Offshore Technology Conférence » qui s'est tenue à Houston du 4 au 7 mai 2015.

La structure tubulaire de renfort comprend un tube en matériau composite et présente à la fois la fonction d'une voûte de pression disposée à l'extérieur d'une gaine interne tubulaire et d'une carcasse disposée à l'intérieur de la gaine interne tubulaire, c'est-à-dire qu'elle reprend généralement l'essentiel des efforts radiaux appliqués à la conduite.

Pour fabriquer la structure tubulaire, il est connu d'enrouler et de chauffer des bandes de matériaux composites autour d'une surface cylindrique qui peut être un mandrin, une gaine tubulaire, ou une structure tubulaire composite préalablement formée.

Les bandes sont généralement formées de rubans de faible épaisseur et de longueur très supérieure à leur largeur.

Pour assurer une réalisation satisfaisante de la structure tubulaire, en particulier pour que cette structure présente une résistance mécanique satisfaisante, un taux de cristallinité suffisant, et une porosité minimale, il est nécessaire d'appliquer une pression sur les bandes, afin d'obtenir une bonne adhésion des bandes au substrat, et de lier les bandes entre elles.

A cet effet, il est connu d'appliquer des trains de galets sur la structure tubulaire venant d'être enroulée afin d'assurer l'application d'une pression. WO2012/160269 décrit un exemple de dispositif de compactage comprenant un train de galets pouvant être utilisé pour fournir une pression sur la structure.

Ces galets sont montés sur un arbre fixe linéaire et sont déplaçables entre une position centrée de repos, et une position désaxée, pour épouser la forme de la pièce sur laquelle est appliqué le train de galets.

Un tel dispositif de compactage ne donne pas entière satisfaction. En effet, dans le cas d'une structure tubulaire telle que décrite plus haut, les bandes formant la structure tubulaire sont enroulées en hélice autour d'un axe central. La structure tubulaire se déplace continûment par rapport aux galets, parallèlement à leur axe de rotation.

Lorsque des galets cylindriques d'axe parallèle à l'axe central s'appliquent sur les spires successives des bandes qui se déplacent le long de l'axe central, un ripage susceptible de déplacer latéralement les fibres de renfort des bandes se produit.

Une solution potentielle est d'incliner l'axe de l'arbre du train de galets par rapport à l'axe central comme suggéré par WO2006/107196. Dans ce cas, l'appui ne se produit plus suivant une génératrice du train de galets, mais uniquement sur certains galets au centre du train. Il n'est donc pas uniforme, et les propriétés mécaniques de la structure sont inhomogènes.

En théorie, un train de galets en forme de diabolo, ou/et réalisé à partir de galets en matériau souple pourrait améliorer la situation, mais ces configurations produisent également du ripage, ne s'adaptent pas à l'évolution du diamètre, ou sont incompatibles avec les températures élevées nécessaires au ramollissement des bandes.

GB 2 212 590 décrit un dispositif de compactage d'un revêtement de surface d'un tube en acier comprenant des galets d'appui.

Un but de l'invention est donc d'obtenir un dispositif de compactage qui permette de réaliser de manière efficace et productive une structure tubulaire résistante mécaniquement et très étanche, à partir de bandes enroulées en hélice.

A cet effet, l'invention a pour objet un dispositif selon la revendication 1.

Le dispositif selon l'invention peut comprendre l'une ou plusieurs des caractéristiques des revendications 2 à 11 ou l'une des caractéristiques suivantes, prise(s) isolément ou suivant toute combinaison techniquement possible :
- l'élément de support est monté rotatif autour de l'axe central, la surface cylindrique étant propre à être entrainée en translation le long de l'axe central ;
- l'élément de support est fixe en rotation autour de l'axe central, la surface cylindrique étant propre à être entrainée en rotation autour de l'axe central, l'élément de support étant propre à être entrainé en translation le long de l'axe central.

L'invention a également pour objet une installation de fabrication selon la revendication 12.

L'installation selon l'invention peut comprendre l'une ou plusieurs des caractéristiques des revendications 13 ou 14.

L'invention a également pour objet un procédé de formation d'une structure tubulaire selon la revendication 15.

Le procédé selon l'invention peut comprendre l'une ou plusieurs des caractéristiques suivantes, prise(s) isolément ou suivant toute combinaison techniquement possible :
- il comporte, après l'étape de compactage :
   * l'enroulement d'une autre pluralité de bandes en hélice suivant l'axe d'hélice autour des bandes préalablement enroulées en hélice, les bandes de l'autre pluralité de bandes étant enroulées suivant un angle d'hélice opposé aux bandes préalablement enroulées ;
   * avant, pendant, ou après l'enroulement en hélice, un chauffage des bandes pour ramollir au moins partiellement les bandes ;
   * en amont et/ou en aval de l'enroulement en hélice, un compactage respectivement de la surface cylindrique et/ou des bandes enroulées par un dispositif de compactage tel que défini plus haut ;
- il comporte l'enroulement d'au moins une nappe d'armures de traction non liée à la structure tubulaire, autour de la structure tubulaire, la ou chaque nappe d'armures de traction comprenant au moins un élément d'armure enroulé autour de la structure tubulaire de renfort ;
- il comporte la réalisation d'une gaine externe autour de la nappe d'armure de traction ;
- la génératrice de compactage comporte une pluralité de micro-bosses, l'amplitude des micro-bosses étant inférieure à trois fois l'épaisseur de la bande, de préférence inférieure à cinq fois l'épaisseur de la bande.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible réalisée dans une installation comprenant un dispositif de compactage selon l'invention ;
- la figure 2 est une vue schématique de l'installation de fabrication selon l'invention ;
- la figure 3 est une vue schématique simplifiée de côté d'un poste de formation d'une structure tubulaire de la conduite selon l'invention comportant un appareil d'enroulement de bandes et un appareil de chauffage ;
- la figure 4 est une vue en coupe transversale du poste de formation de la figure 3;
- la figure 5 est une vue en perspective partiellement éclatée illustrant un train de galets du dispositif de compactage selon l'invention ;
- la figure 6 est une vue illustrant schématiquement l'orientation d'un galet dans le train de galets de la figure 5 ;
- la figure 7 est une vue prise en coupe suivant un premier plan axial médian du train de galets de la figure 5 ;
- la figure 8 est une vue agrandie avec des dimensions exagérées d'un détail marqué VIII illustrant une génératrice sensiblement plane du train de galets de la figure 5 ;
- la figure 9 est une vue prise en coupe suivant un deuxième plan axial médian du train de galets de la figure 5 ;
- la figure 10 est une vue de côté d'un galet du train de galets de la figure 5 ;
- la figure 11 est une vue en coupe suivant le plan axial médian XI-XI du galet de la figure 9 ;
- la figure 12 est une vue schématique simplifiée en perspective éclatée d'un poste de post-compactage comprenant un autre dispositif de compactage selon l'invention ;
- la figure 13 est une vue analogue à la figure 5 du dispositif de compactage de la figure 12.

Dans tout ce qui suit, les termes « extérieur » et « intérieur » s'entendent respectivement comme plus éloigné radialement de l'axe de la conduite flexible et comme plus proche radialement de l'axe de la conduite flexible.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

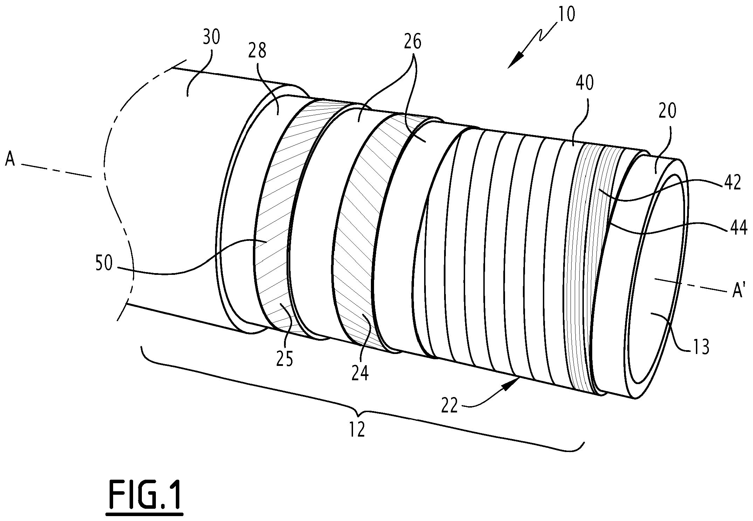

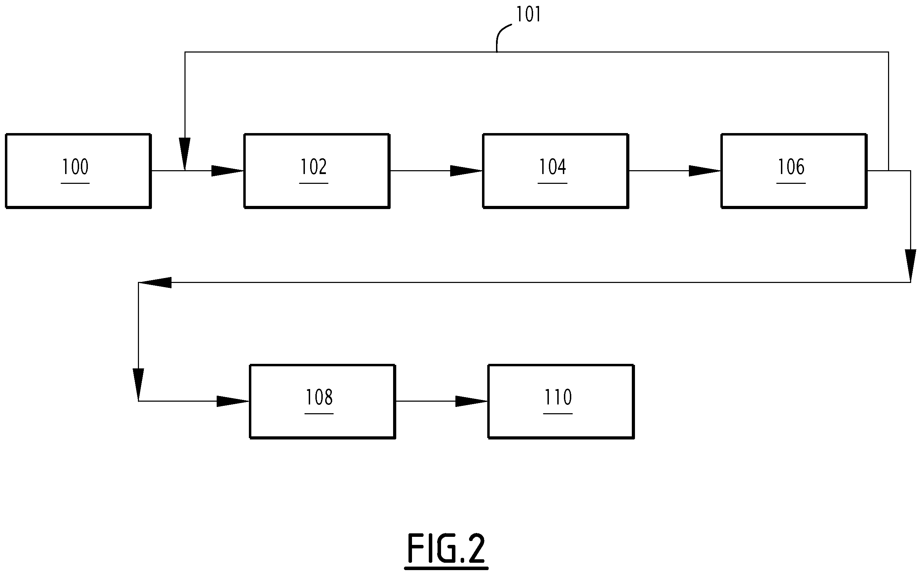

Une première conduite flexible 10 réalisée à l'aide d'une installation 11 de fabrication selon l'invention (représentée schématiquement sur la figure 2) est illustrée par la figure 1.

La conduite flexible 10 comporte un tronçon central 12 illustré en partie sur la figure 1. Elle comporte, à chacune des extrémités axiales du tronçon central 12, un embout d'extrémité (non visible).

En référence à la figure 1, la conduite 10 délimite un passage interne 13 de circulation d'un fluide, avantageusement d'un fluide pétrolier. Le passage interne 13 s'étend suivant un axe A-A', entre l'extrémité amont et l'extrémité aval de la conduite 10. Il débouche à travers les embouts

La conduite flexible 10 est destinée à être disposée à travers une étendue d'eau dans une installation d'exploitation de fluide, notamment d'hydrocarbures. L'étendue d'eau est par exemple, une mer, un lac ou un océan. La profondeur de l'étendue d'eau au droit de l'installation d'exploitation de fluide est par exemple comprise entre 500 m et 4000 m. L'installation d'exploitation de fluide comporte un ensemble de surface et un ensemble de fond (non représentés) ou deux ensembles de surface qui sont avantageusement raccordés entre eux par la conduite flexible 10.

L'ensemble de surface est par exemple flottant. Il est avantageusement formé par une unité flottante de production, de stockage et de déchargement appelée FPSO (« Floating Production, Storage and Offloading » en langue anglaise), une unité flottante dédiée au gaz naturel liquéfié appelée FLNG (« Floating Liquified Natural Gas » en langue anglaise), une plate-forme semi-submersible ou une bouée de déchargement. En variante, l'ensemble de surface est une structure rigide fixe de type « jacket » ou une structure oscillante assujettie au fond de la mer pouvant être par exemple un TLP (« Tension Leg Platform » en langue anglaise).

Dans cet exemple, la conduite flexible 10 est une conduite flexible montante (« riser » en anglais) partiellement ou totalement immergée qui raccorde l'ensemble de fond à l'ensemble de surface. En variante, la conduite flexible 10 est totalement immergée dans l'étendue d'eau et raccorde par exemple deux ensembles de fond (non représentés) entre eux.

Une autre variante consiste en une conduite flexible 10 partiellement immergée dans l'étendue d'eau et raccordant par exemple deux ensembles de surface (typiquement une bouée de déchargement et un FPSO). Ceci est notamment le cas des lignes flexibles de type OOL (« Oil Offloading Line » en langue anglaise).

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

Dans l'exemple de la figure 1, la conduite 10 comporte au moins une gaine interne tubulaire 20 à base de matériau polymère constituant avantageusement une gaine de pression, et une structure tubulaire 22 de renfort, appliquée autour de la gaine tubulaire 20 en étant liée à celle-ci. En variante, la conduite 10 est dépourvue de gaine interne tubulaire 20, la structure tubulaire de renfort 22 étant alors étanche.

La conduite 10 comporte en outre dans cet exemple une pluralité de nappes d'armures de traction 24, 25 disposées extérieurement par rapport à la structure tubulaire de renfort 22 en étant non liées à la structure tubulaire de renfort 22.

Avantageusement, et selon l'utilisation souhaitée, la conduite 10 comporte en outre des couches anti-usure 26, interposées entre la structure tubulaire de renfort 22 et les nappes d'armures de traction 24, 25, ainsi qu'au sein des nappes d'armures de traction 24, 25. Elle comporte en outre avantageusement un ruban de renfort 28, enroulé autour des nappes d'armures de traction 24, 25 et une gaine externe 30, destinée à la protection de la conduite 10.

De manière connue, la gaine tubulaire 20 est destinée à confiner de manière étanche le fluide transporté dans le passage 13. La gaine tubulaire 20 a aussi pour fonction de protéger la structure tubulaire de renfort 22 contre l'abrasion liée à la présence de particules abrasives, par exemple du sable, au sein du fluide transporté dans le passage 13. La gaine tubulaire 20 est formée en matériau polymère, de préférence thermoplastique. Par exemple, le polymère formant la gaine tubulaire 20 est à base d'une polyoléfine telle que du polyéthylène, à base d'un polyamide tel que du PA11 ou du PA12, ou à base d'un polymère fluoré tel que du polyfluorure de vinylidène (PVDF).

En variante, la gaine tubulaire 20 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine tubulaire 20 est par exemple comprise entre 1 mm et 20 mm.

La gaine tubulaire 20 est formée d'un tube en matériau polymère, d'une bande en matériau polymère assemblé, ou d'un mat de polymère imprégné.

Lorsque la gaine tubulaire 20 est formée d'un tube, elle est avantageusement obtenue par extrusion d'un tube thermoplastique choisi notamment parmi les polymères mentionnés ci-dessus.

Lorsque la gaine tubulaire 20 est formée d'une bande en matériau polymère assemblé, elle est réalisée avantageusement par extrusion et enroulement de bandes thermoplastiques d'un polymère tel que décrit plus haut. De préférence, les spires d'une première couche sont jointives (bord à bord sans recouvrement) et les spires d'une couche supérieure sont disposées de façon à avoir un recouvrement de deux bandes adjacentes inférieures assurant l'étanchéité de la gaine tubulaire 20.

Selon le mode préféré de réalisation, la conduite flexible 10 est dépourvue de carcasse interne, et elle est désignée par le terme anglais « smooth bore ». La surface interne de la gaine tubulaire 20 délimite directement le passage interne 13.

Selon une variante non représentée, la conduite flexible comporte une carcasse interne située à l'intérieur de la gaine tubulaire 20, et elle est désignée par le terme anglais « rough bore ». La carcasse interne a pour fonction d'augmenter la résistance à l'écrasement de la conduite flexible, et elle est formée par exemple d'un feuillard métallique profilé, enroulé en spirale. Les spires du feuillard sont avantageusement agrafées les unes aux autres, ce qui permet de reprendre les efforts d'écrasement.

Dans cet exemple, la structure tubulaire de renfort 22 est appliquée directement sur la gaine tubulaire 20. Elle est assemblée sur la gaine tubulaire 20 dans l'installation 11 pour former un ensemble lié avec la gaine tubulaire 20.

La structure tubulaire de renfort 22 est ici une structure composite. Elle comporte au moins une, de préférence une pluralité de couches composites de renfort laminées, et éventuellement, une couche anti-délamination interposée entre au moins deux couches de renfort.

Chaque couche de renfort laminée comporte une superposition de couches composites de renfort.

Dans l'exemple représenté sur la figure 1, chaque couche composite de renfort comporte une matrice en polymère 40 et des fibres de renfort 42 noyées dans la matrice 40.

De préférence, la matrice 40 est formée d'un polymère, notamment d'un polymère thermoplastique. Le polymère de la gaine tubulaire 20 est avantageusement de même nature que celui de la matrice 40. Par « de même nature », on entend au sens de la présente invention que le polymère de la gaine tubulaire 20 et le polymère de la matrice 40 sont propres à fondre et à former un mélange intime, sans séparation de phase, après refroidissement.

Par exemple, le polymère formant la matrice 40 est à base d'une polyoléfine telle que du polyéthylène, à base d'un polyamide tel que du PA11 ou du PA12, ou à base d'un polymère fluoré tel que du polyfluorure de vinylidène (PVDF)

En variante, la matrice 40 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

En variante, le polymère formant la matrice est un polymère thermodur, notamment une résine époxy.

En variante encore, la matrice 40 est formée d'un matériau céramique.

Les fibres de renfort 42 sont par exemple des fibres de carbone, des fibres de verre, des fibres d'aramide, ou/et des fibres de basalte.

Les fibres de renfort 42 présentent généralement une résistance à la traction maximale supérieure à 2 GPa, avantageusement supérieure à 3 GPa et comprise par exemple entre 3 GPa et 6 GPa, telle que mesurée à 23° C selon la Norme ASTM D885M - 10A(2014)e1.

Dans la présente demande, les termes « résistance à la traction maximale » et « résistance à la traction » ont la même signification et désignent la limite à la rupture en traction (« ultimate tensile strength » en langue anglaise) mesurée lors d'un essai de traction.

En outre, les fibres de renfort 42 présentent avantageusement un module de traction supérieur à 50 GPa , compris par exemple entre 70 GPa et 500 GPa , notamment entre 50 GPa et 100 GPa pour les fibres de verre, entre 100 GPa et 500 GPa pour les fibres de carbone et entre 50 GPa et 200 GPa pour les fibres d'aramide, tel que mesuré à 23°C selon la Norme ASTM D885M - 10A(2014)e1.

Dans la présente demande, les termes « module de traction », « module d'Young » et « module d'élasticité en traction » ont la même signification et désignent le module d'élasticité mesuré lors d'un essai de traction.

La densité des fibres de renfort 42 est généralement comprise entre 1,4 g/cm³ et 3,0 g/cm³.

Les fibres de renfort 42 sont par exemple agencées de manière unidirectionnelle dans la matrice 40. Elles sont alors parallèles les unes aux autres. En variante, les fibres de renfort 42 sont croisées suivant deux directions orthogonales, ou encore sont disposées de manière aléatoire dans la matrice (non représenté).

La longueur des fibres de renfort 42 dans chaque couche composite est supérieure à 300 m, et est notamment comprise entre 300 m et 4500 m.

Le diamètre des fibres composites est par exemple inférieur à 100 microns, et est notamment compris entre 4 microns et 10 microns.

De préférence, chaque couche composite de renfort est formée d'un enroulement d'au moins une bande composite 44 présentant plusieurs couches de fibres 42 noyées dans une matrice 40 allongée, de longueur supérieure à au moins 10 fois sa largeur et à au moins 10 fois son épaisseur.

Par exemple, la longueur de chaque bande composite 44 est supérieure à 100 m et est comprise entre 100 m et 4500 m. La largeur de chaque bande composite 44 est comprise entre 6 mm et 50 mm. L'épaisseur de chaque bande composite 44 est comprise entre 0,1 mm et 1 mm.

Chaque bande composite 44 présente ainsi à 23°C, un module de traction supérieur à 10 MPa , notamment compris entre 30 GPa et 170 GPa, tel que mesuré par la Norme NF EN 2561, Janvier 1996, une élongation à la rupture supérieure à 1 %, notamment comprise entre 1 % et 5%, telle que mesurée par la Norme NF EN 2561, Janvier 1996, et une résistance à la traction maximale supérieure à 100 MPa , et notamment comprise entre 350 MPa et 3500 MPa telle que mesurée par la Norme NF EN 2561, Janvier 1996.

Avantageusement, chaque bande composite 44 comporte une matrice en PEEK ou en PVDF renforcée par des fibres de carbone unidirectionnelles orientées parallèlement à l'axe longitudinal de la bande.

Comme on le verra plus bas, lors de la réalisation de chaque couche de renfort, la ou chaque bande composite 44 est enroulée en hélice autour de l'axe A-A' de la gaine tubulaire 20, et est chauffée pour provoquer la fusion partielle de la matrice 40 (dans le cas où la matrice 40 est un thermoplastique), et la liaison avec les spires successives de la bande composite 44, et/ou avec les couches adjacentes qui peuvent être d'autres couches de renfort, des couches anti-délamination ou la gaine tubulaire 20.

La valeur absolue de l'angle d'hélice d'enroulement γ de chaque bande composite 44 par rapport à l'axe A-A' de la conduite 10 est par exemple comprise entre 50° et 85°, préférentiellement entre 55° et 80°.. Ceci assure une élongation du composite sous l'effet de la pression interne, et une coopération adéquate avec les nappes d'armures 24, 25.

L'épaisseur de chaque couche composite est généralement comprise entre 0,10 mm et 0,30 mm, par exemple entre 0,12 mm et 0,17 mm, ou entre 0,22 mm et 0,27 mm.

Dans l'exemple représenté sur la figure 1, la conduite flexible 10 comporte une nappe d'armures interne 24, et une nappe d'armures externe 25 autour de laquelle est disposée la gaine extérieure 30.

Chaque nappe d'armures 24, 25 comporte des éléments d'armure 50 longitudinaux enroulés à pas long autour de l'axe A-A' de la conduite.

Par « enroulé à pas long », on entend que la valeur absolue par rapport à l'axe A-A' de l'angle d'hélice est inférieure à 50°, et est typiquement comprise entre 25° et 45°.

Les éléments d'armure 50 d'une première nappe 24 sont enroulés généralement suivant un angle opposé par rapport aux éléments d'armure 50 d'une deuxième nappe 25. Ainsi, si l'angle d'enroulement par rapport à l'axe A-A' des éléments d'armure 50 de la première nappe 24 est égal à + ϕ, ϕ étant compris entre 25° et 45°, l'angle d'enroulement par rapport à l'axe A-A' des éléments d'armure 50 de la deuxième nappe 25 disposée au contact de la première nappe 24 est par exemple de - ϕ, avec ϕ compris entre 25° et 45°.

Les éléments d'armure 50 sont par exemple formés par des fils métalliques. En variante, les éléments d'armure 50 sont formés par des fils ou rubans plats en composite renforcés avec des fibres de carbone.

La combinaison d'un angle γ d'enroulement des bandes composites 44 de valeur absolue comprise entre 50° et 85°, avantageusement entre 55° et 80°, de préférence entre 60° et 80°, avec un angle ϕ d'enroulement des éléments d'armure 50 de valeur absolue comprise entre 25° et 45°, empêche l'élongation de la structure tubulaire de renfort 22 par effet de compensation produit par les nappes d'armures 24, 25.

La structure tubulaire de renfort 22 pouvant présenter une résistance à la traction faible et ayant tendance à s'allonger sous l'effet d'efforts axiaux, les nappes d'armures 24, 25 reprennent les efforts axiaux et préviennent ainsi l'allongement de la structure tubulaire de renfort 22.

La combinaison optimale entre les angles γ, ϕ d'enroulement réduit drastiquement les contraintes dans l'ensemble tubulaire formé par la gaine interne 20 et la structure tubulaire de renfort 22, et donc l'épaisseur nécessaire pour résister aux efforts de flexion, de pression interne ou/et d'écrasement (« collapse »).

En outre, grâce à la raideur axiale de la structure tubulaire de renfort 22, les nappes d'armures de traction 24, 25 résistent mieux à la compression axiale sous les conditions de pression externe du grand fond.

En outre, l'angle ϕ d'enroulement des éléments d'armure 50 de valeur absolue comprise entre 25° et 45°, pris en combinaison avec l'angle γ d'enroulement des bandes composites 44 de valeur absolue comprise entre 50° et 85 ° autorise une compression de la structure tubulaire de renfort 22, réduisant le rayon de courbure minimal (« minimal bending radius » ou « MBR » en anglais).

La déformation admissible en traction à l'extrados de l'ensemble tubulaire formé par la gaine interne 20 et la structure tubulaire de renfort 22 est supérieure à 1%, avantageusement supérieure à 2%, préférentiellement supérieure à 3%. Cette déformation induit le rayon d'enroulement compatible avec la plupart des équipements de fabrication et de pose.

La gaine externe 30 est destinée à empêcher la perméation de fluide depuis l'extérieur de la conduite flexible 10 vers l'intérieur. Elle est avantageusement réalisée en matériau polymère, notamment à base d'une polyoléfine, telle que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Chaque couche anti-usure 26 est formée par exemple de PA (polyamide), PE (polyéthylène), PVDF (polyfluorure de vinylidène), PEEK (polyétheréthercétone), PEKK (polyéthercétonecétone). Une couche anti-usure 26 est disposée entre la structure tubulaire de renfort 22 et la première nappe d'armures de traction 24. Une autre couche anti-usure 26 est placée entre chaque paire de nappe d'armures 24, 25, avantageusement comme indiqué dans la Norme APl 17J, 4e édition Mai 2014.

Le ruban de renfort 28 est formé par exemple d'une couche anti-flambement de résistance élevée. Cette couche est par exemple en aramide. Le ruban est enroulé autour de la nappe d'armures 25 située la plus à l'extérieur, entre la nappe d'armures 25 et la gaine externe 30, avantageusement comme indiqué dans la Norme APl 17J, 4e édition Mai 2014.

La conduite flexible 10 selon l'invention est fabriquée dans l'installation 11 représentée schématiquement sur les figures 2 à 4.

Comme illustré sur la figure 2, l'installation 11 comporte un poste 100 de fourniture de la gaine 20, éventuellement un poste 102 de pré-compactage, un poste 104 de formation de la structure tubulaire 22 et éventuellement un poste 106 de post-compactage.

L'installation 11 comporte avantageusement un poste 108 d'enroulement des couches d'armure 24, 25 et un poste 110 de formation de la gaine externe 30.

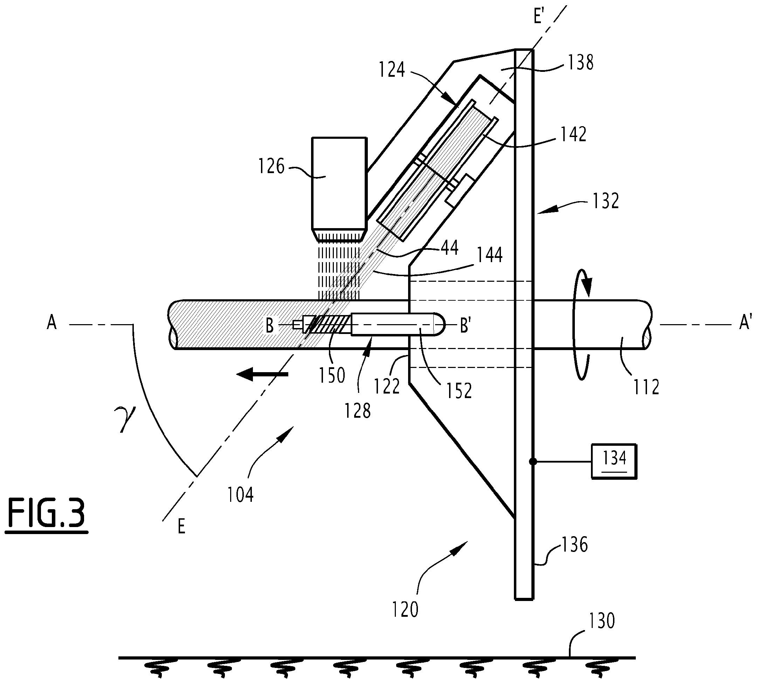

Le poste de fourniture 100 de la gaine 20 est propre à fabriquer et/ou à dérouler la gaine 20 le long d'un axe longitudinal A-A', en vue de son introduction dans les postes 102, 104, 106 successifs. La gaine 20 définit ainsi une surface externe 112 cylindrique (voir notamment figure 3) sur laquelle la structure tubulaire 22 est formée.

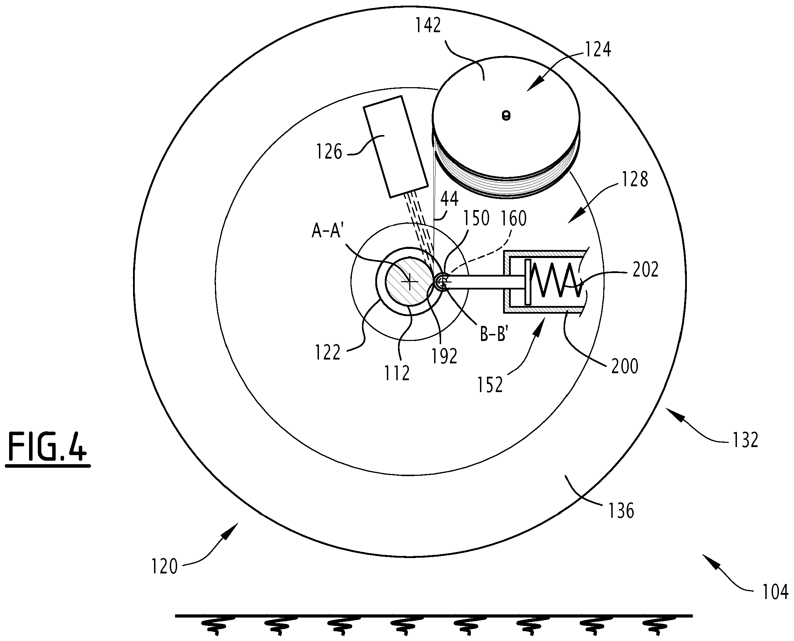

Le poste de formation 104 est illustré schématiquement sur les figures 3 et 4. Il comporte un bâti 120 délimitant un passage central 122 de circulation de la gaine 20 le long d'un axe central A-A', un appareil 124 d'enroulement parallèle d'une pluralité de bandes 44 sur la surface externe 112 définie ici par la gaine 20, et au moins un appareil 126 de chauffage des bandes 44.

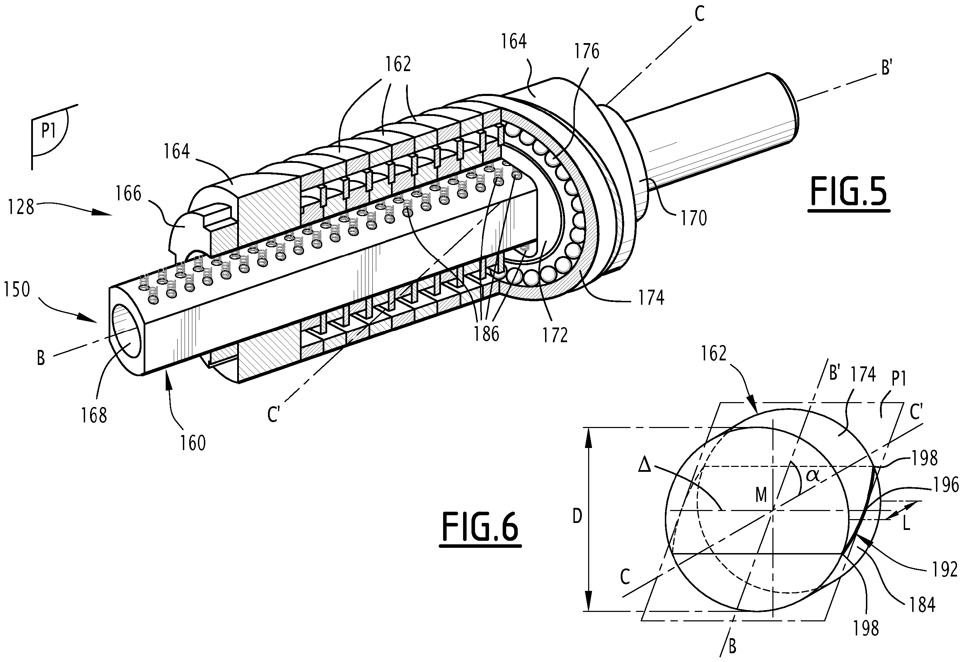

Le poste de formation 104 comporte en outre un dispositif de compactage 128 selon l'invention illustré plus en détail sur les figures 5 à 11.

Le bâti 120 comporte ici une structure fixe 130, fixée sur le sol, au moins un élément de support rotatif formé par une cage mobile 132 montée mobile en rotation sur la structure fixe 130 autour de l'axe central A-A', et un mécanisme 134 d'entraînement en rotation de la cage mobile 132 par rapport à la structure fixe 130.

La cage mobile 132 comporte un tambour 136 rotatif autour de l'axe central A-A' et un support 138 porté par le tambour 136 à l'écart de l'axe central A-A'.

Le passage central 122 traverse le tambour 136.

L'appareil d'enroulement 124 est monté sur le support 138 de la cage mobile 132 pour être entraîné en rotation conjointement avec la cage mobile 132 autour de l'axe A-A'.

L'appareil d'enroulement 124 comporte une pluralité de dérouleurs 142, et des éléments de guidage 144 des bandes 44 issues de chaque dérouleur 142 pour les guider vers la surface externe 112 en les maintenant parallèles.

Chaque dérouleur 142 est propre à dérouler respectivement au moins une bande 44 destinée à former une couche de renfort.

Chaque dérouleur 142 comporte au moins une bobine sur laquelle est enroulée au moins une bande 44.

Les éléments de guidage 144 comportent des guides d'alignement des bandes parallèlement les unes aux autres le long d'un axe E-E' incliné par rapport à l'axe central A-A' d'un angle égal à l'angle d'hélice γ, pour permettre l'enroulement en hélice des bandes 44 issues de chaque dérouleur 142 autour de la surface externe 112 lors de la rotation de la cage mobile 132 autour de l'axe A-A'.

L'appareil de chauffage 126 est également porté par le support 138 de la cage mobile 132. Il est placé en regard de la surface externe 112, au niveau de la région d'application des bandes 44 sur la surface externe 112. Il comporte par exemple un laser, une lampe, notamment une lampe xénon, une lampe infrarouge, un dispositif à lumière pulsée, un dispositif de soudure ultrasons et/ou un dispositif de soufflage d'air chaud. L'appareil de chauffage 126 est propre à ramollir, avantageusement à faire fondre, la matrice thermoplastique 40 de la bande 44 pour permettre son application complémentaire sur la surface externe 112.

Dans cet exemple, le dispositif de compactage 128 comporte un bâti commun avec le bâti 120 du poste de formation 104. Il comporte au moins un train de galets 150 porté par la cage mobile 132 pour être entraîné conjointement en rotation avec la cage mobile 132 autour de l'axe central A-A' par rapport à la surface externe 112. Le dispositif de compactage 128 comporte en outre un mécanisme d'approche 152, propre à déplacer chaque train de galets 150 vers l'axe central A-A'.

En référence à la figure 5, le train de galets 150 comporte un arbre central 160 droit, d'axe central B-B' parallèle à l'axe A-A', et une pluralité de galets 162 parallèles montés rotatifs autour d'un axe C-C' incliné par rapport à l'axe B-B' d'un angle α.

Dans cet exemple, le train de galets 150 comporte en outre des embouts d'extrémité 164, situés longitudinalement de part et d'autre des galets 162 du train de galets 150, et un organe de blocage 166 de l'empilement des galets 162 et des embouts d'extrémité 164 sur l'arbre central 160.

L'arbre central 160 est monté immobile en rotation autour de son axe B-B'. Dans cet exemple, il définit une lumière centrale 168 de circulation d'un fluide caloporteur, pour la circulation d'un fluide caloporteur destiné au refroidissement des galets 162. Ceci permet notamment de refroidir les galets 162 lorsque l'appareil de chauffage 126 chauffe les bandes 44 à une température élevée, typiquement supérieure à 350°C, notamment lorsque les bandes 44 ont une matrice 40 thermoplastique en PEEK.

L'arbre central 160 est muni à une extrémité d'une collerette radiale 170 destinée au blocage en translation le long de l'axe B-B' de l'empilement des galets 162 et des embouts d'extrémité 164.

Dans cet exemple, l'arbre central 160 présente une section transversale de contour non circulaire. Ce contour est par exemple un contour polygonal, notamment un contour rectangle ou carré.

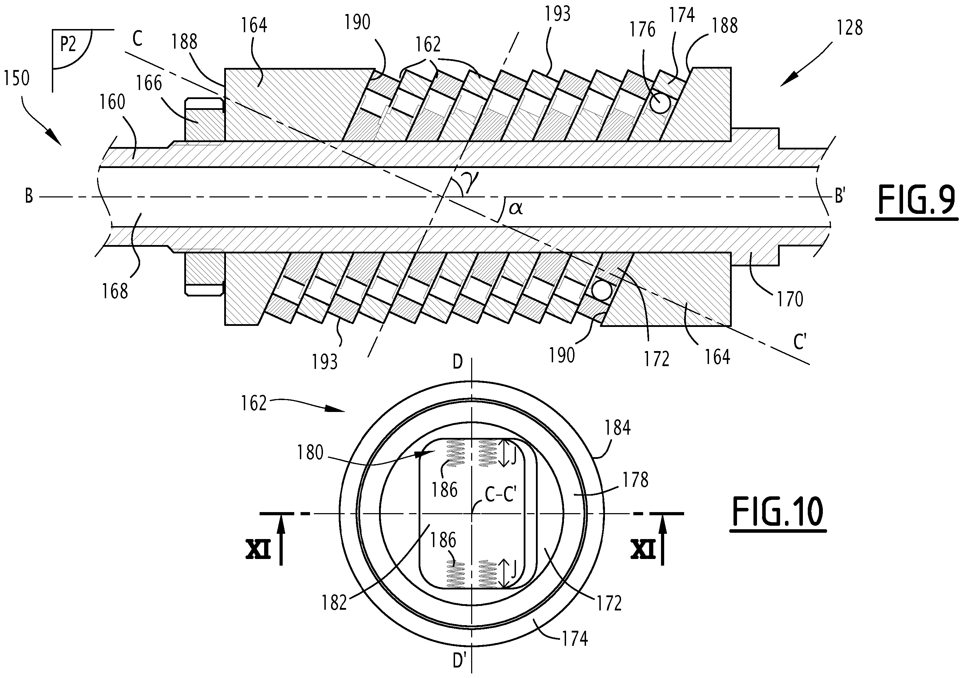

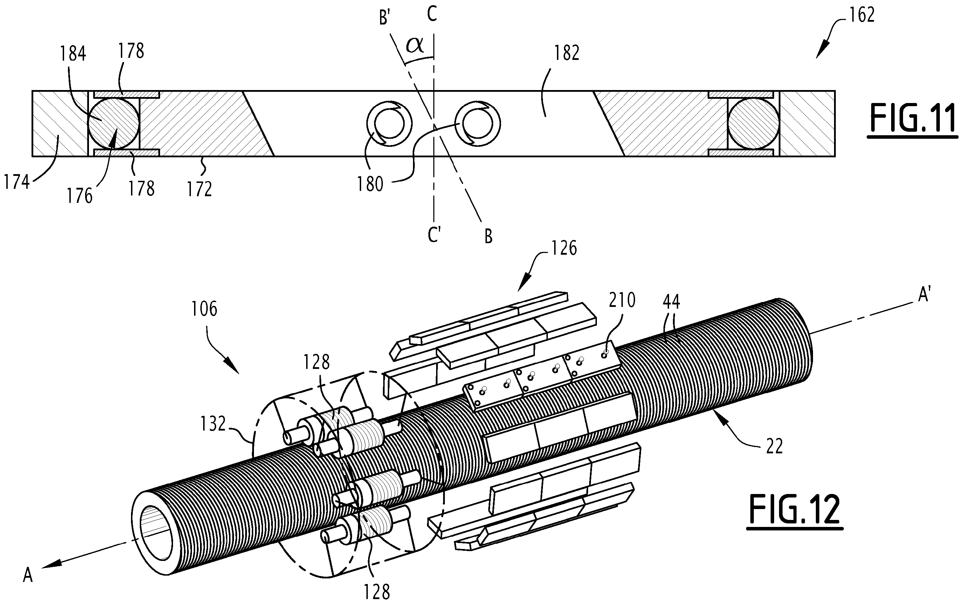

En référence aux figures 10 et 11, chaque galet 162 comporte une bague intérieure 172 montée fixe en rotation sur l'arbre central 160, et une bague extérieure 174 montée rotative sur la bague intérieure 172 autour de l'axe C-C'.

Avantageusement, chaque galet 162 comporte en outre un roulement interne 176 interposé entre la bague intérieure 172 et la bague extérieure 174 et éventuellement des flasques latéraux 178 de maintien du roulement interne 176.

Dans l'exemple représenté sur les figures 10 et 11, chaque galet 162 est monté mobile perpendiculairement à son axe de rotation C-C' sur l'arbre central 160, entre une position centrale de repos et des positions désaxées. Il comporte dans ce cas un mécanisme 186 de sollicitation élastique du galet 162 vers sa position centrale. Le mécanisme 186 est formé par exemple par un ressort inséré dans un trou ménagé dans l'arbre central 160.

Dans cet exemple, la bague intérieure 172 et la bague extérieure 174 sont réalisées en métal, notamment en acier.

La bague intérieure 172 définit un trou central traversant 182 dans lequel est engagé l'arbre central 160.

Le trou central 182 s'étend suivant un axe B-B' incliné d'un angle α par rapport à l'axe de rotation C-C' du galet 162. Le trou central 182 présente une section transversale analogue à la section transversale extérieure de l'arbre central 160, mais non conjuguée avec la section transversale extérieure de l'arbre central 160 suivant au moins une direction de déplacement D-D'.

Ainsi, la bague intérieure 172 est montée sur l'arbre central 160 avec un jeu J dans le trou 182 suivant la direction D-D' permettant la mobilité de la bague intérieure 172 en translation, perpendiculairement à l'axe de rotation C-C', tout en maintenant la bague intérieure 172 fixe en rotation autour de l'axe B-B' de l'arbre.

La bague extérieure 174 présente une surface extérieure 184 cylindrique destinée à s'appliquer sur les bandes 44 de la structure tubulaire 22.

Elle est montée rotative librement autour de l'axe C-C' par rapport à la bague intérieure 172 et à l'arbre central 160. L'axe C-C' définit avec l'axe B-B' un angle α qui est égal à 90° moins l'angle d'hélice γ des bandes 44 de la structure tubulaire 22 avantageusement à plus ou moins cinq degrés prés, préférentiellement à plus ou moins trois degrés près. Idéalement, l'angle α doit être choisi égal à 90° moins l'angle d'hélice γ afin de minimiser les glissements relatifs entre la bande 44 et le galet 162 lors du compactage. Cependant, il a été constaté qu'il est possible de s'écarter de trois à cinq degrés de l'angle optimum sans dégrader significativement la qualité de la structure tubulaire 22, ce qui permet en pratique de réduire le nombre de trains de galets différents qui sont nécessaires pour couvrir une plage d'angles d'hélice γ.

L'angle α est par exemple inférieur à 40° et notamment compris entre 10 ° et 30°.

Les axes C-C' de rotation des galets 162 successifs sont parallèles les uns aux autres, en étant décalés les uns par rapport aux autres.

La largeur L de chaque galet 162, prise au niveau de la surface extérieure 184, parallèlement à l'axe C-C' est inférieure à 15 mm, avantageusement inférieure à 10 mm, plus avantageusement inférieure à 8 mm, préférentiellement comprise entre 4 mm et 7 mm.

Cette largeur L est généralement inférieure à la largeur de la bande 44. Par exemple, un train de galets 150 comportant quatre galets 162 de largeur unitaire L égale à 6 mm peut être utilisé pour compacter une bande 44 de largeur égale à 20 mm.

Par ailleurs, le diamètre D de chaque galet 162, pris au niveau de la surface périphérique 184 est généralement supérieur à 50 mm et est avantageusement compris entre 60 mm et 150 mm.

Le roulement 176 comporte une pluralité de billes 184 disposées entre la bague intérieure 172 et la bague extérieure 174.

Les flasques latéraux 178 font saillie radialement à la périphérie de la bague intérieure 172. Ils retiennent latéralement les billes 184 du roulement 176.

Lorsqu'il est présent, le mécanisme de sollicitation 180 comporte au moins un ressort 186 disposé dans le passage central 182 au niveau du jeu J entre l'arbre central 160 et la bague intérieure 172.

De préférence, le mécanisme de sollicitation 180 comporte au moins deux ressorts opposés 186 pour solliciter le galet 162 vers sa position centrale dans les deux sens d'excursion dans la direction D-D' par rapport à la position centrale.

Chaque embout 164 est formé d'un collier engagé autour de l'arbre 160 et présentant une première surface latérale 188 de butée perpendiculaire à l'axe B-B', et une deuxième surface latérale 190 d'appui des galets 162 située dans un plan incliné de l'angle γ par rapport à l'axe B-B'.

La surface de butée 188 d'un premier embout 164 bute contre la collerette 170. La surface d'appui 190 du premier embout 164 est disposée au contact d'un galet 162 d'extrémité du train de galets 150.

La surface de butée 188 d'un deuxième embout 164 est située au contact de l'organe de blocage 166. La surface d'appui 190 du deuxième embout 164 est disposée au contact d'un autre galet d'extrémité du train de galets 150, en regard de la surface d'appui 190 du premier embout 164.

Ainsi, les galets 162 du train de galets 150 sont montés dans l'espace entre les surfaces d'appui 190, éventuellement avec un jeu fonctionnel entre eux, inférieur à la largeur du galet 162.

L'organe de blocage 166 est fixé sur l'arbre central 160 pour définir la position relative des embouts 164, et le jeu fonctionnel entre les galets 162 du train de galets 150.

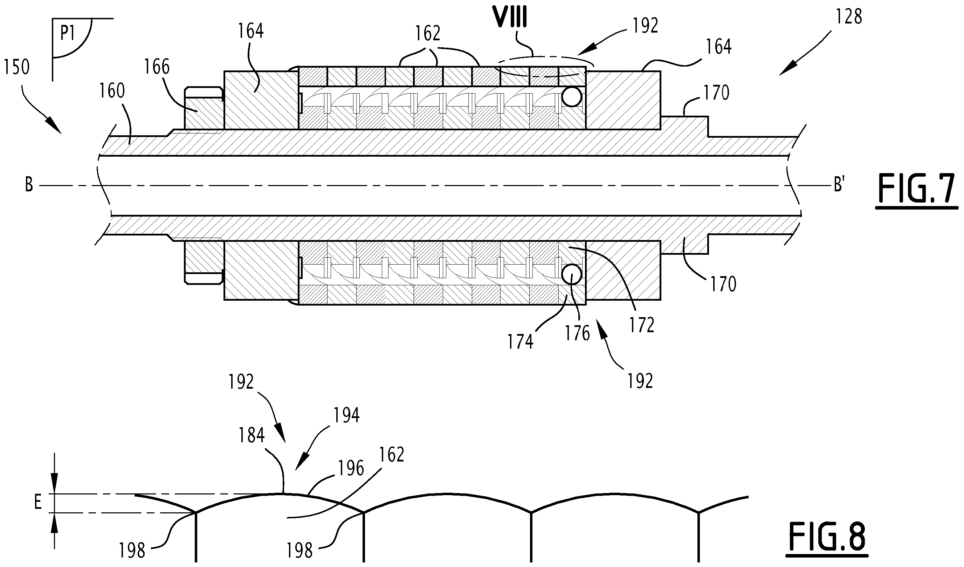

Comme illustré sur les figures 5, 7, et 9, les galets 162 du train de galets 150 définissent, dans un plan axial médian P1 visible sur les figures 5 et 7, deux génératrices 192 de compactage pseudo-linéaires et pseudo-planes. Au contraire, dans au moins un autre plan axial médian P2, représenté sur la figure 9, les génératrices 193 définies par les galets 162 du train de galets 150 définissent des dents macroscopiques successives.

La figure 8 illustre de manière exagérée les dimensions de chaque génératrice de compactage 192 le long des galets 162. Comme visible sur la figure 6, la génératrice de compactage 192 est définie sur chaque galet 162 par l'intersection entre la surface périphérique cylindrique 184 de la bague extérieure 174 et le plan axial médian P1. Le plan axial médian P1 contient l'axe B-B' et la droite Δ. La droite Δ est la droite qui passe par le centre M de la surface cylindrique 184, et qui est perpendiculaire aux axes C-C' et B-B'

Chaque segment 194 de la génératrice 192 situé sur un galet 162 présente ainsi une forme de micro-bosse ayant un sommet 196 et deux extrémités latérales 198 sur les bords du galet 162. Chaque micro-bosse présente une hauteur E avantageusement inférieure au tiers de l'épaisseur de la bande 44, de préférence inférieure au cinquième de l'épaisseur de la bande 44. Ainsi, la hauteur des micro-bosses est nettement inférieure à l'épaisseur de la bande 44, de sorte que la pression de compactage appliquée par le train de galets 150 le long de la génératrice 192 est sensiblement uniforme et que les fibres présentes dans la matrice de la bande 44 ne sont pas désorganisées lors du compactage.

Cette hauteur E est généralement inférieure à 0,2 mm, avantageusement inférieure à 0,1 mm et préférentiellement inférieure à 0,05 mm, notamment lorsque le diamètre de chaque galet 162 est compris entre 60 mm et 100 mm, lorsque la largeur L de chaque galet 162 est comprise entre 5 mm et 7 mm et lorsque l'angle d'hélice γ est compris entre 60° et 70°.

Les tableaux ci-dessous illustrent les hauteurs E susceptibles d'être obtenues pour différents diamètres D de galets, angles d'hélices γ et largeurs L de galets 162.

| γ (degrés) | α(degrés) | D (mm) | L (mm) | E (mm) |
|---|---|---|---|---|
| 50 | 40 | 60 | 5 | 0,07 |
| 50 | 40 | 60 | 6 | 0,11 |
| 50 | 40 | 60 | 7 | 0,14 |
| 50 | 40 | 60 | 8 | 0,19 |
| 60 | 30 | 60 | 7 | 0,07 |
| 65 | 25 | 60 | 7 | 0,04 |

La hauteur E diminue quand le diamètre D augmente comme le montre le tableau suivant :

| γ (degrés) | α(degrés) | D (mm) | L (mm) | E (mm) |
|---|---|---|---|---|
| 50 | 40 | 50 | 6 | 0,13 |
| 50 | 40 | 60 | 6 | 0,11 |
| 50 | 40 | 70 | 6 | 0,09 |
| 50 | 40 | 80 | 6 | 0,08 |
| 50 | 40 | 90 | 6 | 0,07 |
| 50 | 40 | 100 | 6 | 0,06 |

La hauteur E est une fonction décroissante de l'angle α et donc une fonction croissante de l'angle γ comme le montre le tableau suivant :

| γ (degrés) | α(degrés) | D (mm) | L (mm) | E (mm) |
|---|---|---|---|---|
| 30 | 60 | 60 | 6 | 0,45 |
| 40 | 50 | 60 | 6 | 0,21 |
| 50 | 40 | 60 | 6 | 0,11 |
| 60 | 30 | 60 | 6 | 0,05 |
| 70 | 20 | 60 | 6 | 0,02 |
| 80 | 10 | 60 | 6 | 0,005 |

Par suite, connaissant l'épaisseur de la bande 44 et l'angle d'hélice γ, il est possible de déterminer le diamètre D et la largeur L des galets 162 permettant d'obtenir une génératrice de compactage 162 présentant des micro-bosses d'amplitude E nettement inférieure à l'épaisseur de la bande 44, par exemple d'amplitude E inférieure au cinquième de l'épaisseur de la bande 44. En pratique, il convient d'abord de réduire au maximum la largeur L des galets 162 en tenant compte des contraintes industrielles de fabrication et de montage, par exemple de choisir une largeur L de l'ordre de 5 mm à 7 mm, puis d'augmenter le diamètre D des galets 162 jusqu'à ce que l'amplitude E soit inférieure à la valeur souhaitée.

De telles dimensions assurent un compactage efficace des bandes 44, sans désorganisation des fibres 42 présentes dans la matrice grâce à la pseudo-linéarité et la pseudo planéité des génératrices de compactage 192.

Avantageusement, le train de galets 150 comporte au moins huit galets 162, préférentiellement au moins vingt galets 162, ce qui permet de poser et de compacter simultanément plusieurs bandes 44 et ainsi d'augmenter la vitesse de fabrication du poste de formation 104. Par exemple, il est possible avec un seul train de galets 150 de poser et de compacter simultanément dix bandes 44 de largeur unitaire 25 mm sur une surface externe 112 cylindrique de diamètre extérieur 150 mm, lorsque ce train de galets 150 comporte quarante galets 162 présentant chacun une largeur L égale à 6,5 mm. Les solutions de l'art antérieur basés sur l'emploi de galets cylindriques non segmentés présentent une productivité inférieure, car dans les mêmes conditions un galet non segmenté ne peut compacter de façon satisfaisante au plus une seule bande de largeur maximale de l'ordre de 20 mm.

En référence à la figure 4, le mécanisme d'approche 152 comporte un support 200 du train de galets 150, mobile transversalement par rapport à l'axe central A-A', et au moins un organe de sollicitation 202 élastique du train de galets 150 vers l'axe central A-A' sollicitant le support 200 et le train de galets 150 vers l'axe central A-A'.

Sur le support 200, l'arbre 160 est monté avec son axe B-B' parallèle à l'axe A-A'. Au moins une génératrice de compactage 192 est disposée en regard de l'axe A-A', parallèlement à l'axe B-B' pour s'appliquer sur les bandes 44, après l'enroulement sur la surface externe 112.

De préférence, au moins un galet 162 s'applique individuellement sur une bande 44 respective, le galet 162 étant incliné d'un angle correspondant à l'angle d'hélice γ, comme illustré sur la figure 3.

Ainsi, chaque galet 162 est propre à rouler sur la bande 44 sur laquelle il s'applique en décrivant une hélice de même pas et de même sens que la bande 44, en exerçant une pression de compactage orientée radialement par rapport à l'axe central de la structure tubulaire 22.

En référence à la figure 12, le poste de post-compactage 106 est situé en aval du poste de formation 104. En référence à la figure 12, il comporte un appareil de chauffage 126 fixe, et au moins un dispositif de compactage 128 monté rotatif sur une cage mobile 132 d'un bâti 120.

L'appareil de chauffage 126 est par exemple un four destiné à ramollir en surface la structure tubulaire 22. Il comporte par exemple une pluralité de lampes 210 réparties autour de l'axe central A-A', en amont de chaque dispositif de compactage 128 le long de l'axe A-A'.

La cage mobile 132 est propre à être entraînée en rotation autour de l'axe A-A' lors du défilement de la structure tubulaire 22 en regard de l'appareil de chauffage 126.

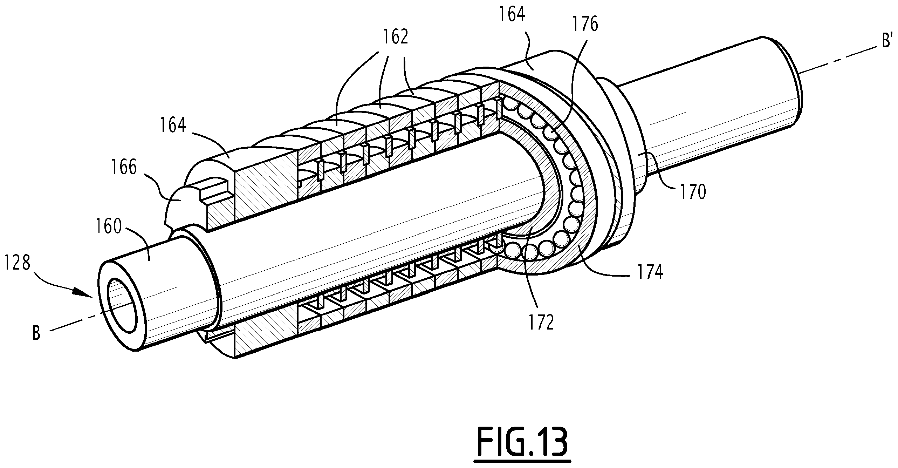

Comme illustré par la figure 13, le dispositif de compactage 128 comporte une pluralité de trains de galets 150 répartis autour de la structure tubulaire 22. Il comporte, pour chaque train de galets 150, un mécanisme d'approche 152 tel que décrit précédemment pour le poste de formation 104.

Chaque train de galets 150 présente une structure analogue à celle décrite précédemment. Toutefois, à la différence du train de galets 150 du poste de formation 104, le train de galets 150 décrit sur la figure 13 comporte un arbre central 160 présentant une section transversale de contour circulaire. La bague intérieure 172 de chaque galet 162 est montée sans jeu transversal sur l'arbre central 160. Chaque galet 162 est donc dépourvu de mécanisme de sollicitation 180.

Au moins un train de galets 150 est avantageusement muni d'un capteur d'effort pour déterminer la pression appliquée sur les bandes 44 par les galets 162 et piloter la position radiale du train de galets 150 en fonction de la pression mesurée.

Le poste de pré-compactage 102 est de structure analogue à celui du poste de post-compactage 106. Il est disposé en amont du poste de formation 104 pour permettre le ramollissement de la gaine 20, et la préparation de la surface externe 112 pour la rendre la plus cylindrique possible et favoriser l'adhérence des bandes 44.

Le poste d'enroulement 108 des nappes d'armures 24, 25 est situé en aval du poste de post-compactage 106. Il comporte des appareils (non représentés) d'enroulement en hélice des éléments d'armure 50 pour former successivement les nappes 24, 25.

Le poste de formation de la gaine externe 110 est situé en aval du poste d'enroulement 108. Il comporte par exemple un appareil (non représenté) d'extrusion de la gaine externe 30.

Le procédé de fabrication d'une structure tubulaire 22 selon l'invention va dans l'installation 11 maintenant être décrit, dans l'exemple de la réalisation d'une conduite flexible 10.

Initialement, la gaine 20 est fabriquée et/ou est fournie dans le poste de fourniture 100. Elle est amenée jusqu'au poste 104 de formation de la structure 22, et est déplacée en translation à travers le poste de formation 104 de la structure 22 le long de l'axe A-A' par un dispositif d'entrainement en translation.

Avantageusement, avant le poste 104, la gaine 20 passe dans le poste de pré-compactage 102. La gaine 20 passe d'abord dans un appareil de chauffage 126, pour amener sa surface externe 112 à une température supérieure à 100°C, et notamment comprise entre 100 °C et 350 °C.

Les trains de galets 150 sont entraînés en rotation autour de la gaine 20. Les galets 162 s'appliquent sur la surface externe 112 pour la rendre la plus cylindrique possible.

Puis, la gaine 20 s'introduit dans le passage central 122 du poste de formation 104.

Dans ce poste 104, une pluralité de couches de renfort sont formées à partir des bandes 44.

Pour chaque couche de renfort, une pluralité de bandes 44 sont déroulées en parallèle à partir des dérouleurs 142 de l'appareil d'enroulement 124. Les éléments de guidage 144 maintiennent les bandes 44 parallèles entre elles, avec un jeu contrôlé.

Les bandes 44 parallèles passent devant l'appareil de chauffage 126, où elles sont chauffées avantageusement à une température comprise entre 150°C et 450°C, ladite température dépendant de la nature du polymère thermoplastique constituant la matrice 40 des bandes 44.

Lorsque la matrice 40 des bandes 44 est en PEEK (point de fusion de l'ordre de 350°C), la température de chauffage des bandes 44 par l'appareil de chauffage 126 est avantageusement comprise entre 350°C et 450°C, préférentiellement comprise entre 380°C et 420°C. Lorsque la matrice 40 des bandes 44 est en PVDF (point de fusion de l'ordre de 180°C), la température de chauffage des bandes 44 par l'appareil de chauffage 126 est avantageusement comprise entre 180°C et 280°C, préférentiellement comprise entre 200°C et 250°C. Ceci entraine avantageusement la fusion au moins partielle de la matrice 40.

La cage mobile 132 étant entraînée en rotation autour de l'axe A-A', et la gaine 20 se déplaçant en translation le long de l'axe A-A', les bandes 44 s'enroulent en hélice autour de la surface externe 112 définie par la gaine 20 ou définie par une couche formée autour de la gaine 20, avec un angle d'hélice égal à γ.

Juste après leur enroulement, le train de galets 150 entraîné en rotation conjointement avec la cage mobile 132 s'applique sur les bandes 44.

A cet effet, comme indiqué précédemment, les galets 162 successifs définissent une génératrice de compactage 192 qui s'appuie sur les bandes 44.

L'angle d'orientation des galets étant égal à α, les galets 162 roulent sur les bandes 44 selon l'axe local de la bande 44.

Par ailleurs, la hauteur E des micro-bosses définies par la génératrice de compactage 192 étant inférieure à trois fois l'épaisseur de la bande 44, de préférence inférieure à cinq fois l'épaisseur de la bande 44, la génératrice de compactage 192 est pseudo-linéaire et s'étend sensiblement dans un plan.

Les bandes 44 sont donc compactées de manière uniforme, en évitant la désorganisation des fibres 42 présentes dans la matrice 40, tout en assurant une répartition efficace du matériau fondu de la matrice 40 pour former une structure tubulaire 22 continue et étanche.

Puis, la structure tubulaire 22 est ainsi formée passe dans un poste 106 de post-compactage. La surface externe 112 de la structure tubulaire 22 est alors ramollie au passage dans l'appareil de chauffage 106, puis est à nouveau compactée par des trains de galets 150 rotatifs. Les galets 162 des trains de galets 150 roulent suivant une trajectoire en hélice le long des bandes 44 respectives, assurant une désorganisation minimale des fibres de renfort 42.

Avantageusement, les opérations de pré-compactage (poste 102), de formation de la structure tubulaire (poste 104) et de post-compactage (poste 106) sont répétées (boucle 101 sur la figure 2) pour former d'autres couches de renfort avec d'autres bandes 44, comme décrit précédemment.

La structure tubulaire 22 est ainsi fabriquée couche par couche en ajoutant à chaque passage dans le poste 104 une nouvelle couche extérieure d'épaisseur sensiblement égale à celle d'une bande 44. Ces opérations peuvent être répétées plusieurs dizaines de fois, notamment lorsque la ou les bandes 44 présentent une épaisseur nettement inférieure à l'épaisseur finale de la paroi de la structure tubulaire 22. De plus, les caractéristiques des bandes 44 et/ou les paramètres de pose et/ou de compactage peuvent être modifiés à chaque fois qu'une nouvelle couche est ajoutée. Par exemple, il est possible de modifier l'angle d'hélice des bandes 44, notamment pour croiser les fibres de deux couches superposées.

Ensuite, la structure tubulaire 22 passe dans le poste d'enroulement 108, pour permettre la mise en place des nappes d'armures 24, 25.

Les éléments d'armure 50 des nappes d'armures de traction 24, 25 sont enroulés autour de la structure tubulaire de renfort 22, de manière non liée avec la structure tubulaire de renfort 22. Avantageusement une couche anti-usure 26 est interposée entre la structure tubulaire de renfort 22 et la première nappe d'armures de traction 24, et entre chaque paire de nappes d'armures de traction 24, 25.

Puis, un ruban de renfort 28 est enroulé autour de la nappe d'armures de traction 25 la plus à l'extérieur.

Ensuite, dans le poste de formation de la gaine externe 110, la gaine externe 30 est formée autour des nappes d'armures 24, 25.

Le compactage assuré par les galets 162 dans le poste de formation de la structure 22, puis dans le poste de post-compactage 106 renforce les propriétés mécaniques de la structure tubulaire 22, en particulier en offrant une résistance mécanique interlaminaire augmentée, un taux de cristallinité plus grand, et un taux de porosité diminué.

La structure tubulaire 22 est donc plus robuste mécaniquement et présente une étanchéité améliorée au fluide destiné à circuler dans le passage interne 13.

Grâce à l'orientation particulière des galets 162 sur l'arbre central 160, les galets 162 sont aptes à rouler sur les bandes 44 de la structure tubulaire 22, en diminuant au minimum la désorganisation des fibres présentes dans la matrice 40.

Dans une variante, chaque galet 162 comporte un pallier de type bague à la place des billes 184, ce qui améliore le transfert thermique entre l'arbre central 160 et la bague extérieure 174 et permet ainsi un meilleur refroidissement du train de galets 150.

Dans une autre variante, la bague extérieure 174 de chaque galet 162 présente une surface extérieure 184 en forme de diabolo afin de réduire l'amplitude des micro-bosses de la génératrice de compactage. Dans une autre variante, l'installation 11 est dépourvue de poste de pré-compactage 102 ou/et de poste de post-compactage 106.

Ceci est le cas par exemple lorsque la matrice 40 est en polymère thermodur ou en matériau céramique. Dans le cas où la matrice 40 est en polymère thermodur, le chauffage de réticulation est par ailleurs effectué juste après le compactage des bandes 44.

Dans une autre variante, la surface externe 112 cylindrique sur laquelle sont enroulées les bandes 44 n'est pas située sur une gaine tubulaire de la conduite 10 ou sur une couche de renfort déjà formée, mais plutôt sur un mandrin, ce qui permet notamment de fabriquer une conduite 10 dépourvue d'une gaine interne tubulaire 20. La présente invention peut notamment être mise en oeuvre en combinaison avec le procédé de fabrication sur mandrin décrit dans WO2008/029252.

Dans une autre variante destinée notamment à la fabrication de conduites flexibles TCP, l'installation 11 ne comprend pas le poste d'enroulement 108 des nappes d'armures et/ou le poste de formation de la gaine externe 110, et la conduite 10 est dépourvue de nappes d'armures 24, 25. et/ou de gaine externe 30.

Dans une autre variante, l'élément de support 132 est fixe en rotation autour de l'axe A-A', la surface cylindrique 112 étant entrainée en rotation autour de l'axe central A-A'.

L'élément de support 132 et la surface cylindrique 112 sont déplaçables en translation l'un par rapport à l'autre le long de l'axe A-A', par exemple par translation de l'élément de support 132 le long de l'axe A-A'.

Le dispositif et l'installation objets de la présente invention ne se limitent pas au seul domaine des conduites flexibles et ils s'appliquent plus généralement à la fabrication de toutes les structures tubulaires qui sont réalisées par enroulement hélicoïdal de bandes en matériau composite. La présente invention peut par exemple être appliquée pour fabriquer une structure tubulaire de renfort d'un réservoir haute pression.

## Revendications

1. - Dispositif (128) de compactage d'une structure tubulaire (22), comportant :
- un élément de support (132) définissant un passage (122) de circulation d'une surface cylindrique (112) destinée à recevoir la structure tubulaire (22), le passage de circulation (122) présentant un axe central (A-A') destiné à être coaxial avec la surface cylindrique (112), l'élément de support (132) et la surface cylindrique (112) étant destinés à être montés rotatifs l'un par rapport à l'autre autour de l'axe central (A-A') ;
- au moins un train de galets (150) de compactage, porté par l'élément de support (132), le train de galets (150) comportant :
* un arbre central (160) droit, présentant un axe longitudinal (B-B');
* une pluralité de galets (162) de compactage, montés parallèles les uns aux autres autour de l'arbre central (160), chaque galet (162) de compactage présentant une surface périphérique rotative autour de l'arbre central (160) autour d'un axe de galet (C-C');
dans lequel l'axe longitudinal (B-B') de l'arbre central (160) est parallèle à l'axe central (A-A'), chaque axe de galet (C-C') étant incliné d'un angle d'inclinaison (α) non nul par rapport à l'axe longitudinal (B-B') de l'arbre central (160).

2. - Dispositif (128) selon la revendication 1, dans lequel l'angle d'inclinaison (α) est inférieur à 40° et est notamment compris entre 10° et 30°.

3. - Dispositif (128) selon la revendication 1 ou 2, dans lequel les galets (162) définissent au moins une génératrice de compactage (192) pseudo-linéaire destinée à entrer en contact avec la structure tubulaire (22).

4. - Dispositif (128) selon la revendication 3, dans lequel la génératrice de compactage (192) comporte une pluralité de micro-bosses, l'amplitude des micro-bosses étant inférieure à 0,1 mm.

5. - Dispositif (128) selon l'une quelconque des revendications précédentes, dans lequel la largeur de chaque galet (162) est inférieure à 10 mm.

6. - Dispositif (128) selon l'une quelconque des revendications précédentes, dans lequel le diamètre de chaque galet (162) est supérieur à 50 mm.

7. - Dispositif (128) selon l'une quelconque des revendications précédentes, dans lequel le train de galets (150) comporte deux embouts axiaux inclinés (164), montés fixes en rotation sur l'arbre central (160) de part et d'autre des galets (162).

8. - Dispositif (128) selon l'une quelconque des revendications précédentes, dans lequel chaque galet (162) est mobile transversalement perpendiculairement à l'axe de galet (C-C'), entre une position de repos centrale et une pluralité de positions désaxées, le galet (162) comportant un mécanisme (180) de sollicitation élastique vers la position de repos.

9. - Dispositif (128) selon l'une quelconque des revendications précédentes, dans lequel chaque galet (162) comprend une bague intérieure (172), montée fixe en rotation autour de l'arbre central (160), une bague extérieure (174), montée mobile en rotation autour de la bague intérieure (172), et au moins un roulement (176) interposé entre la bague intérieure (172) et la bague extérieure (174).

10. - Dispositif (128) selon la revendication 9, dans lequel la bague intérieure (172) comporte un trou traversant (182) recevant l'arbre central (160), le trou traversant (182) présentant un axe (B-B') incliné par rapport à l'axe de galet (C-C').

11. - Dispositif (128) selon l'une quelconque des revendications précédentes, dans lequel l'arbre central (160) présente une lumière centrale (168) de circulation d'un fluide caloporteur destiné au refroidissement des galets (162).

12. - Installation (11) de fabrication d'une structure tubulaire (22), comportant :
- un poste de formation (104) de la structure tubulaire (22) comportant au moins un appareil d'enroulement (176) en hélice de bandes parallèles (44) autour d'une surface cylindrique (112) suivant un angle d'hélice (γ) et au moins un appareil de chauffage (126) des bandes (44) ;
- au moins un dispositif (128) de compactage selon l'une quelconque des revendications précédentes, disposé dans le poste de formation (104) de la structure tubulaire (22), en amont du poste de formation (104) de la structure tubulaire (22) ou/et en aval du poste de formation (104) de la structure tubulaire (22), le train de galets (150) étant destiné à s'appliquer sur la surface cylindrique (112) et/ou sur la structure tubulaire (22) formée sur la surface cylindrique (112).

13. - installation (11) selon la revendication 12, dans laquelle la différence entre l'angle d'inclinaison (α) de chaque galet (162) et 90° moins l'angle d'hélice (γ) est inférieure en valeur absolue à 5°, notamment inférieure à 3°.

14. - installation (11) selon l'une quelconque des revendications 12 ou 13, dans laquelle le dispositif (128) de compactage est disposé dans le poste de formation (104) de structure tubulaire (22) ou en aval du poste de formation (104) de structure tubulaire (22), le train de galets (150) étant disposé pour appliquer au moins un galet (162) sur chaque bande (44) de la structure tubulaire (22).

15. - Procédé de formation d'une structure tubulaire (22), comprenant les étapes suivantes :
- enroulement (176) en hélice de bandes parallèles (44) autour d'une surface cylindrique (112) suivant un angle d'hélice (γ);
- avant, pendant, ou après l'enroulement (176) en hélice, chauffage des bandes (44) pour ramollir au moins partiellement les bandes (44) ;
- avant, pendant, ou après l'enroulement (176) en hélice, compactage respectivement de la surface cylindrique (112) et/ou des bandes (44) enroulées par au moins un dispositif (128) de compactage selon l'une quelconque des revendications 1 à 11.

## Patentansprüche

1. - Vorrichtung (128) zum Verdichten einer rohrförmigen Struktur (22), umfassend:
- ein Halterungselement (132), das einen Durchgang (122) für den Durchlauf einer zylindrischen Oberfläche (112) definiert, die dazu bestimmt ist, die rohrförmige Struktur (22) aufzunehmen, wobei der Durchlaufdurchgang (122) eine Mittelachse (A-A') aufweist, die dazu bestimmt ist dazu bestimmt ist, koaxial mit der zylindrischen Oberfläche (112) zu sein, wobei das Halterungselement (132) und die zylindrische Oberfläche (112) dazu bestimmt sind, in Bezug aufeinander um die Mittelachse (A-A') drehbar montiert zu werden;
- mindestens einen Strang von Verdichtungsrollen (150), der von dem Halterungselement (132) getragen wird, der Rollenstrang (150) umfassend:
* eine gerade mittlere Welle (160) die eine Längsachse (B-B') aufweist;
* eine Vielzahl von Verdichtungsrollen (162), die parallel zueinander um die mittlere Welle (160) montiert sind, wobei jede Verdichtungsrolle (162) eine Umfangsfläche aufweist, die um die mittlere Welle (160) um eine Rollenachse (C- C') drehbar ist;
wobei die Längsachse (B-B') der mittleren Welle (160) parallel zu der mittleren Achse (A-A') ist, wobei jede Rollenachse (C-C') um einen Neigungswinkel (α) ungleich Null in Bezug auf die Längsachse (B-B') der mittleren Welle (160) geneigt ist.

2. - Vorrichtung (128) nach Anspruch 1, wobei der Neigungswinkel (α) weniger als 40° ist und insbesondere zwischen 10° und 30° ist.

3. - Vorrichtung (128) nach Anspruch 1 oder 2, wobei die Rollen (162) mindestens eine pseudolineare Verdichtungsgenerator (192) definieren, der dazu bestimmt ist, mit der rohrförmigen Struktur (22) in Kontakt zu kommen.

4. - Vorrichtung (128) nach Anspruch 3, wobei der Verdichtungsgenerator (192) eine Vielzahl von Mikrohöckern umfasst, wobei die Amplitude der Mikrohöcker weniger als 0,1 mm ist.

5. - System (128) nach einem der vorherigen Ansprüche, wobei die Breite jeder Rolle (162) unter 10 mm ist.

6. - System (128) nach einem der vorherigen Ansprüche, wobei der Durchmesser von jeder Rolle (162) über 50 mm ist.

7. - Vorrichtung (128) nach einem der vorherigen Ansprüche, wobei der Rollenstrang (150) zwei geneigte axiale Endstücke (164) aufweist, die auf der mittleren Welle (160) auf beiden Seiten der Rollen (162) drehfest montiert sind.

8. - Vorrichtung (128) nach einem der vorherigen Ansprüche, wobei jede Rolle (162) quer senkrecht zu der Rollenachse (C-C') zwischen einer mittleren Ruheposition und einer Vielzahl von außeraxialen Positionen beweglich ist, wobei die Rolle (162) einen Mechanismus (180) zum elastischen Vorspannen in die Ruheposition umfasst.

9. - Vorrichtung (128) nach einem der vorherigen Ansprüche, wobei jede Rolle (162) einen Innenring (172), der drehfest um die mittlere Welle (160) montiert ist, einen Außenring (174), der drehbar um den Innenring (172) montiert ist, und mindestens ein Lager (176), das zwischen dem Innenring (172) und dem Außenring (174) angeordnet ist, umfasst.

10. - Vorrichtung (128) nach Anspruch 9, wobei der Innenring (172) ein Durchgangsloch (182) umfasst, das die mittlere Welle (160) aufnimmt, wobei das Durchgangsloch (182) eine Achse (B-B') aufweist, die in Bezug auf die Rollenachse (C-C') geneigt ist.

11. - Vorrichtung (128) nach einem der vorherigen Ansprüche, wobei die mittlere Welle (160) ein mittleres Lumen (168) für die Zirkulation eines Wärmeträgerfluids zur Kühlung der Rollen (162) aufweist.

12. - Anlage (11) zur Herstellung einer rohrförmigen Struktur (22), umfassend:
- eine Bildungsstation (104) der rohrförmigen Struktur (22), umfassend mindestens einen Apparat (176) zum spiralförmigen Wickeln paralleler Streifen (44) um eine zylindrische Oberfläche (112) unter einem Spiralwinkel (γ) und mindestens einen Heizapparat (126) der Streifen (44);
- mindestens eine Verdichtungsvorrichtung (128) nach einem der vorherigen Ansprüche, die in der Bildungsstation (104) der rohrförmigen Struktur (22), stromaufwärts von der Formstation (104) der Rohrstruktur (22) oder/und stromabwärts von der Bildungsstation (104) der rohrförmigen Struktur (22) angeordnet ist, wobei der Rollenstrang (150) dazu bestimmt ist, an der zylindrischen Oberfläche (112) und/oder der röhrenförmigen Struktur (22) anzuliegen, die auf der zylindrischen Oberfläche (112) gebildet ist.

13. - Anlage (11) nach Anspruch 12, wobei die Differenz zwischen dem Neigungswinkel (α) jeder Rolle (162) und 90° minus dem Spiralwinkel (γ) als Absolutwert kleiner als 5°, insbesondere kleiner als 3°, ist.

14. - Anlage (11) nach einem der Ansprüche 12 oder 13, wobei die Verdichtungsvorrichtung (128) in der Bildungsstation (104) der Rohrstruktur (22) oder stromabwärts von der Bildungsstation (104) der Rohrstruktur (22) angeordnet ist, wobei der Rollenstrang (150) angeordnet ist, um mindestens eine Rolle (162) auf jeden Streifen (44) der rohrförmigen Struktur (22) anzuwenden.

15. - Verfahren zur Herstellung einer rohrförmigen Struktur (22), umfassend die folgenden Schritte:
- spiralförmiges Wickeln (176) von parallelen Streifen (44) um eine zylindrische Oberfläche (112) unter einem Spiralwinkel (γ);
- vor, während oder nach dem spiralförmigen Aufwickeln (176) Erhitzen der Streifen (44), um die Streifen (44) zumindest teilweise zu erweichen;
- vor, während oder nach dem spiralförmigen Wickeln (176), Verdichten jeweils der zylindrischen Oberfläche (112) und/oder der gewickelten Streifen (44) durch mindestens eine Verdichtungsvorrichtung (128) nach einem der Ansprüche 1 bis 11.

## Claims

1. - A device (128) for compacting a tubular structure (22), including:
- a support element (132) defining a circulation passage (122) of a cylindrical surface (112) intended to receive the tubular structure (22), the circulation passage (122) having a central axis (A-A') intended to be coaxial with the cylindrical surface (112), the support element (132) and the cylindrical surface (112) being intended to be mounted rotating relative to one another about the central axis (A-A');
- at least one compacting roller assembly (150), borne by the support element (132), the roller assembly (150) including:
* a straight central shaft (160), having a longitudinal axis (B-B');
* a plurality of compacting rollers (162), mounted parallel to one another about the central shaft (160), each compacting roller (162) having a peripheral surface rotating around the central shaft (160) about a roller axis (C-C');
wherein the longitudinal axis (B-B') of the central shaft (160) is parallel to the central axis (A-A'), each roller axis (C-C') being inclined by a nonzero incline angle (α) relative to the longitudinal axis (B-B') of the central shaft (160).

2. - The device (128) according to claim 1, wherein the incline angle (α) is less than 40° and is in particular between 10° and 30°.

3. - The device (128) according to claim 1 or 2, wherein the rollers (162) define at least one pseudo-linear compacting generatrix (192) intended to come into contact with the tubular structure (22).

4. - The device (128) according to claim 3, wherein the compacting generatrix (192) includes a plurality of micro-bosses, the amplitude of the micro-bosses being less than 0.1 mm.

5. - The device (128) according to any one of the preceding claims, wherein the width of each roller (162) is less than 10 mm.

6. - The device (128) according to any one of the preceding claims, wherein the diameter of each roller (162) is greater than 50 mm.

7. - The device (128) according to any one of the preceding claims, wherein the roller assembly (150) includes two inclined axial endpieces (164), mounted fixed in rotation on the central shaft (160) on either side of the rollers (162).

8. - The device (128) according to any one of the preceding claims, wherein each roller (162) is mounted transversely perpendicular to the roller axis (C-C'), between a central idle position and a plurality of off-centered positions, the roller (162) including a mechanism (180) for resilient biais toward the idle position.

9. - The device (128) according to any one of the preceding claims, wherein each roller (162) comprises an inner ring (172), mounted fixed in rotation about the central shaft (160), an outer ring (174), mounted rotatably about the inner ring (172), and at least one rolling bearing (176) inserted between the inner ring (172) and the outer ring (174).

10. - The device (128) according to claim 9, wherein the inner ring (172) includes a through hole (182) receiving the central shaft (160), the through hole (182) having an inclined axis (B-B') relative to the roller axis (C-C').

11. - The device (128) according to any one of the preceding claims, wherein the central shaft (160) has a central opening (168) for circulation of a heat transfer fluid intended to cool the rollers (162).

12. - An installation (11) for producing a tubular structure (22), including:
- a station (104) for forming the tubular structure (22) including at least one apparatus (176) for winding parallel strips (44) in a helix around a cylindrical surface (112) according to a helix angle (γ) and at least one apparatus (126) for heating the strips (44);
- at least one compacting device (128) according to any one of the preceding claims, arranged in the station (104) for forming the tubular structure (22), upstream of the station (104) for forming the tubular structure (22) and/or downstream of the station (104) for forming the tubular structure (22), the roller assembly (150) being intended to be applied on the cylindrical surface (112) and/or on the tubular structure (22) formed on the cylindrical surface (112).

13. - The installation (11) according to claim 12, wherein the difference between the incline angle (α) of each roller (162) and 90° minus the helix angle (γ) is less in absolute value than 5°, in particular less in absolute value than 3°.

14. - The installation (11) according to any one of claims 12 to 13, wherein the compacting device (128) is arranged in the station (104) for forming the tubular structure (22) or downstream of the station (104) for forming the tubular structure (22), the roller assembly (150) being arranged to apply at least one roller (162) on each strip (44) of the tubular structure (22).

15. - A method for forming a tubular structure (22), comprising the following steps:
- winding (176) parallel strips (44) in a helix around a cylindrical surface (112) according to a helix angle (γ);
- before, during or after the winding (176) in a helix, heating the strips (44) to soften the strips (44) at least partially;
- before, during or after the winding (176) in a helix, compacting the cylindrical surface (112) and/or the wound strips (44), respectively, via at least one compacting device (128) according to any one of claims 1 to 11.
